# EUROPEAN PATENT SPECIFICATION

(11) **EP 2 361 857 B1**
(45) Date of publication and mention of the grant of the patent: **23.05.2012**
(21) Application number: 11153733.8
(22) Date of filing: 08.02.2011
(51) Int. Cl.: B65G 21/20

(54) **Adjustable conveyor guide**
Einstellbare Förderführung
Guide de transporteur ajustable

(30) Priority: 18.02.2010 GB 201002794
(43) Date of publication of application: 31.08.2011
(73) Proprietor: Zepf Technologies UK Limited, Cumbernauld G68 0EF (GB)
(72) Inventor: Spence, Ian, Gartcosh, G69 8LH (GB); McAllister, Mark, Tullibody, FK10 2GA (GB)
(74) Representative: Tucker, Nigel P.

(56) References cited:
- EP-B1- 1 799 597

## Description

This invention relates to an adjustable conveyor guide rail unit according to the preamble of claim 1 and a method of adjusting a conveyor guide according to the preamble of claim 15 as disclosed by WO 2006/024930, in particular to a conveyor guide including one or more such guide rail units that may be adjusted to define a channel with varying discrete widths. The present invention has particular application in automated handling lines where containers, such as bottles, are processed (e.g. cleaned, filled, capped and/or labelled).

Automated handling lines usually comprise a number of machines, typically rotary handling machines, that fulfil various functions such as cleaning, assembling, filling, sealing or labelling an article. The articles are generally transported from machine to machine on automated conveyors. These conveyors typically comprise a moving floor, such as a conveyor belt.

One or more guide rails may be employed to the sides of the conveyor path to ensure that articles follow any change in direction in the conveyor and to ensure that vibrations do not cause an article to topple. These guide rails (typically four, two to either side at different heights) are usually carried by guide rail units. Typically, a guide rail unit will be provided to either side of the conveyer path. For long sections of conveyor path, a series of guide rail units will line each side of the conveyor path. As conveyors often handle articles of differing sizes (e.g. a bottling line may handle bottles of varying sizes, both in width and height), it is advantageous for the conveyor guide rails to be adjustable. Such a provision is normally fulfilled by making the guide rail units removable, thus allowing them to be replaced by guide rail units with differently positioned guide rails.

However, this places a requirement for a range of differently-sized guide rail units to be made and also to be to hand, and the change-over operation is slow and time consuming.

WO2006/024830 discloses an improvement on such designs. This document discloses guide rails positioned using rotatable spiders having legs of different lengths. The legs project transversely with respect to the length of the guide rail and the ends of the spiders are received within a recess provided in the guide rail. Thumb wheels are used to clamp the guide rail in place. To adjust the width of the guide rail, the thumb wheels are loosened, the guide rails are slid clear of the spiders, the spiders are rotated to present a leg of different length, the guide rails are slid back such that the leg of the guide rail is received within the recess, and the thumb wheels are tightened once more to secure the guide rail in place.

The present invention seeks to improve upon the design of WO2006/024830.

The guide rail unit of claim 4, wherein the spider is removably mounted on the shaft.

The guide rail unit of any preceding claim, further comprising a second guide member disposed above the first guide member.

The second guide member is mounted on at least one support attached to the first guide member.

The conveyor guide of Claim 8 or Claim 9, comprising a channel through which articles may be conveyed, wherein a first side of the channel is defined at least in part by a plurality of guide rail units according to any of Claims 1 to 7.
wherein an adjacent pair of the plurality of guide rail units are coupled together.

Against this background, and from a first aspect, the present invention resides in an adjustable conveyor guide rail unit according to the appended claim 1 adapted for use in a conveyor guide to define the side of a channel through which an article may be conveyed. The guide rail unit comprises a guide member operable to be set in a plurality of discrete positions relative to the channel as a whole, thereby allowing the width of the channel to be varied.

The guide member is coupled to a mount that includes a rotatable spider mounted on a shaft. The spider has a plurality of legs of different lengths relative to the shaft, the legs each terminating at an end of corresponding shape that includes a widened portion. Each spider is rotatable about the shaft to present an end of a leg to a correspondingly-shaped recess provided in the adjustable guide member thereby to set the guide member in the plurality of positions.

Such an assembly is advantageous as it allows the width of the channel to be varied without requiring the time-consuming removal of parts, followed by replacement with other parts. Moreover, the provision of discrete positions allows a simple and quick to operate mechanism to be employed. By discrete positions, it is meant that a plurality of predetermined positions are available to be selected by a user. This is in contrast to the often more complex mechanisms employed in the prior art that allow a user to set any position within a range but that are time-consuming to operate.

This spider arrangement provides a simple way of operating the assembly. To adjust the channel to handle an article of different width, an operator need only rotate the spider to position the guide member at a different position. Moreover, the combination an enlarged portion to the end of the spider's leg and a correspondingly shaped recess allows the guide rail to be fixed in position when the end of the leg is received in the recess. This can be contrasted with the design of the guide rail of WO2006/024830 where a thumb wheel must be operated separately to release the guide rail for adjustment and then to fix the guide rail into position.

Various shapes of the end of the leg and recess may be used to effect the setting of the guide rail into position. For example, any combination of shapes may be used that provides an interference of parts that prevents the guide rail from being moved into or out of the channel defined by the guide rail. To this end, the recess may have a narrowed neck for receiving the leg of the spider and an enlarged head for receiving the end of the leg, such that the neck is narrower than the widened portion of the end. This arrangement provides the required interference that stops movement of the guide member and fixes the width of the channel. The end of each leg may be cross-shaped. Preferably, the end of each leg ends with a foot that forms the widened portion. Optionally, the foot is L-shaped, T-shaped, or Y-shaped. The foot may be jigsaw shaped.

For ease of operation, the spider may be movable along the shaft thereby allowing the foot to be moved clear of the recess. The spider may be removably mounted on the shaft. This may be to aid swapping of spiders having legs of different sizes, thereby allowing a greater range of widths of the channel to be selected. The spider may comprise a spring detent grub screw operable to set the spider in position. The spring detent grub screw may allow rapid adjustment of the spider between indexed positions yet still firmly secure the spider into the correct positions. In addition, it allows spiders to be removed and replaced with similar spiders rapidly.

The spider may comprise legs of different length radiating from a body having a central hole sized to receive the shaft. Alternatively, the legs may be of the same length radiating from a body having an eccentrically positioned hole sized to receive the shaft.

Optionally, the spider comprises at least three mutually orthogonal legs of different lengths. Four legs may be provided to be mutually orthogonal, although more than four legs may be provided if arranged on two levels. In this latter arrangement, the spider may simply be flipped over to access either level, the legs being mutually orthogonal to the other legs in its level in a preferred arrangement. Other arrangements are possible, e.g. two legs 180° apart. -

Preferably, the guide rail unit further comprises a second spider like the first spider and wherein the guide member has a second recess for receiving a foot of the second spider. This is advantageous where a single guide rail unit is employed per side of the channel or where unlinked guide rail units are used, as it provides two points of contact that support the guide member in position, thereby providing more accurate positioning.

Optionally, one or more slots may be provided in the guide member to receive a correspondingly sized post, thereby constraining movement of the guide member. For example, the slot may extend laterally: this allows an operator to slide the guide member to vary the width of the channel, before re-engaging the spider's foot into the recess. The different length of the leg will set the guide member at a different position, thereby providing a different width of the channel.

Optionally, the guide rail unit may be used with a second, like guide rail unit that comprises a further guide member coupled to a further mount, wherein respective mounts are connected to a base, at least one of the mounts being connected via a spacer such that it is at a different height to the other mount. This allows the guide members to be set to different heights. Where two like guide rail units are used together, providing spacers of varying height for each guide member allows the guide members to be set to a desired height independently of one another.

Preferably, the guide rail unit further comprises a second guide member disposed above the first guide member. Advantageously, this allows articles to be supported at two different heights thereby reducing the likelihood of an article toppling over. The second guide member need not be directly above the first. For example, the second guide member may be set inwardly of the first. This may be advantageous (particularly when used in conjunction with a second like guide rail unit that faces the first across the channel) for example, when bottles with slender necks are being conveyed: the first guide member may be set to support the wide body of the bottle, whereas the second may be set to support the narrower neck of the bottle. Providing guide members of different widths would allow this whilst still conveniently allowing them to be mounted to supports provided by the lower guide member.

Optionally, the second guide member is mounted on at least one support attached to the first guide member. The first guide member may be disposed below the second guide member. This is convenient because the support will move within the guide member beneath it. Thus, the guide members move in unison when their positions are adjusted by rotation of the spider or spiders. Where slots are provided in the first guide member to receive a post, a slot may be positioned in the second guide member to receive the same post.

Preferably, the at least one support is configured to mount the second guide member in a plurality of discrete positions. The support may extend upwardly and the second guide member may have an associated height setting means that co-operates with an upper portion of the at least one support thereby mounting the second guide member on the at least one support at the plurality of discrete positions. The height setting means may be provided on an upper surface of the second guide member. The height setting means may be operated with one hand. Optionally, the at least one supports comprise a plurality of narrowed portions and the second guide member contain moveable parts arranged to be received within the narrowed positions thereby defining a plurality of mounting positions of the second guide member at different heights. Optionally, the height setting means comprises a collar sized and shaped to receive the support. The collar may be provided with a button that, when actuated, causes the moving part to move into and out of the narrowed portion.

Again, this corresponds to a simple arrangement that allows rapid adjustment of the height of the second guide member. Any number of narrowed portions may be provided on each of the at least one supports, although four is currently preferred. To allow greater range of adjustment, other supports may be provided with narrowed portions provided at different levels.

The invention also extends to a conveyor guide including one or more such guide rail units. For example, the conveyor guide may comprise a channel through which articles may be conveyed, wherein a first side of the channel is defined at least in part by a plurality of any of the guide rail units described above. Advantageously, an adjacent pair of the plurality of guide rail units may be coupled together.

Optionally, the guide members of the adjacent pair of guide rail units are coupled together such that movement of one guide member causes a corresponding movement of the other guide member. Either alternatively or additionally, the second guide members of the adjacent pair of guide rail units may be coupled together such that movement of one second guide member causes a corresponding movement of the other second guide member. Either of these arrangements are convenient in that moving one guide rail or second guide rail ensures that adjacent guide rails move in unison. Thus, setting the position of one guide rail automatically sets the position of all other guide rails.

Preferably, the adjacent guide rail units are coupled by interlocking formations, such as substantially jigsaw shaped projections. Optionally, the conveyor guide further comprises a member that extends from one of guide rail unit of the adjacent pair to be received in a recess provided in the other guide rail unit of the adjacent pair. Optionally, the member overlaps the interlocking formations. This stops relative movement in the direction transverse to that prevented by the jigsaw shaped projections.

When using adjacent, coupled guide rail units, it may be preferable for each of the plurality of guide rail units to have only one spider and only one co-operating recess. This is because positioning and guidance of the guide rails as they move may be performed by the collective action of the plurality of spiders.

From a second aspect, the present invention resides in a method of adjusting a conveyor guide comprising a guide rail unit including a guide member arranged to define one side of a channel through which an article may be conveyed. The guide rail unit further comprises a rotatable spider mounted on a shaft, the spider having a plurality of legs of different lengths relative to the shaft. Each leg terminates in an end of corresponding shape that includes a widened portion, and the guide member has a slot sized and positioned to receive an end of a leg of the spider.

The method comprises changing the position of the guide member from a first position to a second position of a plurality of discrete positions relative to the guide rail unit as a whole, thereby adjusting the width of the channel, by:(i) moving to the spider relative the guide member to disengage the end of the spider from the slot; (ii) rotating the spider to present a different end to the slot; and (iii) moving the spider relative to the guide member such that the different end is received back in position within the slot. Relative movement between the spider and guide member is required to disengage an end of the spider from the slot, and likewise to cause re-engagement. Although the guide member could be moved away from a stationary spider, it is preferred for the spider to be lifted relative to the stationary guide member. This allows a operator to use one hand to lift and rotate the spider and to use their other hand to slide the guide member in or out of the channel to the correct position to receive the shorter or longer leg of the spider.

The method may be used with any of the guide rail units described above, and with any of the features described in relation to those guide rail units. For example, the end of each leg may terminate with a t-shaped foot, with a correspondingly shaped slot being provided in the guide member. Moreover, posts within slots may be provided to guide movement of the guide member into and out of the channel.

In order that the invention can be more readily understood, reference will now be made by way of example only, to the accompanying drawings in which:
Figure 1 is a perspective view of a conveyor guide according to the present invention from above and to one side;
Figure 2 is an end view of the conveyor guide of Figure 1;
Figure 3 is a side view of the conveyor guide of Figure 1;
Figure 4 is a plan view of the conveyor guide of Figure 1;

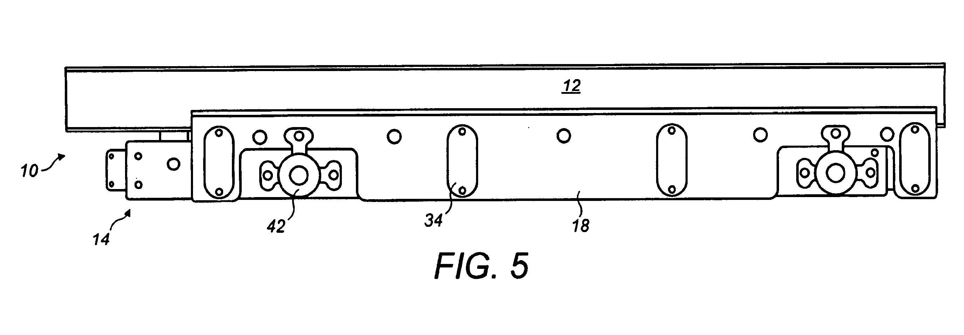

Figure 5 is a plan view of the conveyor guide of Figure 1 with the top guide rail removed to show more clearly the components beneath it;
Figure 6 is a section through line VI-VI of Figure 4;
Figure 7 is a section through line VII-VII of Figure 4;
Figure 8 is a perspective detail taken from Figure 1 to show the spider in greater detail;
Figure 9 is a plan view of the spider of Figure 8;
Figures 10a to 10d are plan views of alternative designs of spiders for use in embodiments of the present invention; and
Figure 11 is a perspective view of a conveyor guide comprising a series of guide rail units on each side.

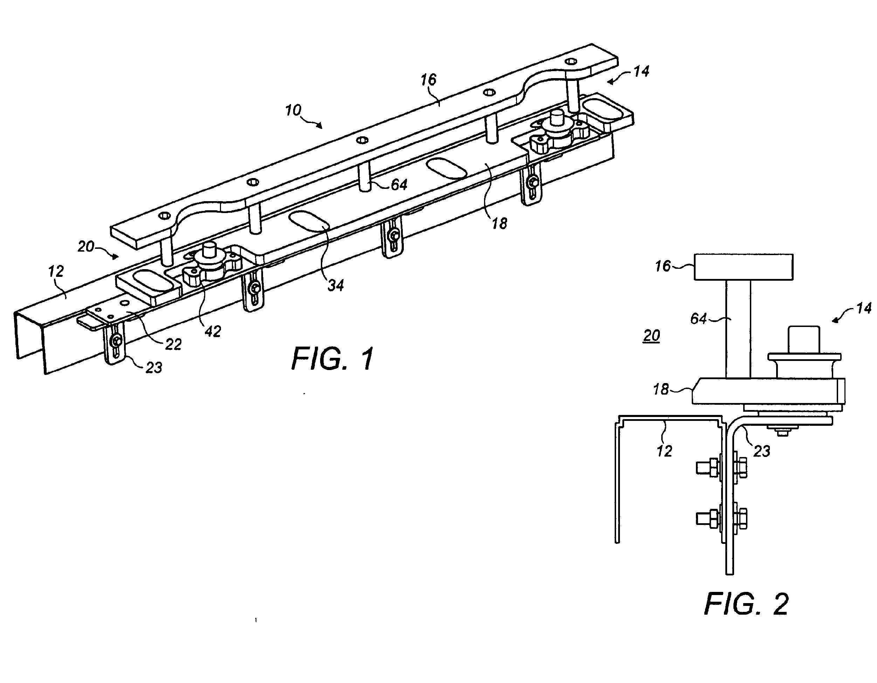

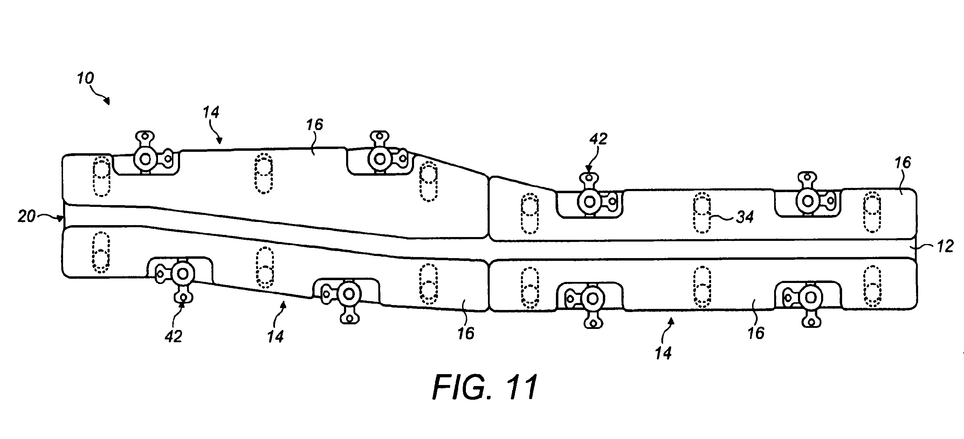

A conveyor guide 10 is shown in Figure 11 that comprises four guide rail units 14 that together define a channel 20 through which articles are conveyed. A rail unit 14 is shown in more detail in Figure 1. This Figure shows only a single guide rail unit 14 for the sake of clarity. The guide rail unit 14 is mounted to a plain base beam 12. In normal use, guide rail units 14 are likely to be mounted on either side of a conveyor belt or the like. The conveyor guide 10 may define a short straight channel, although the channel could be of any length and could define a curved or kinked path.

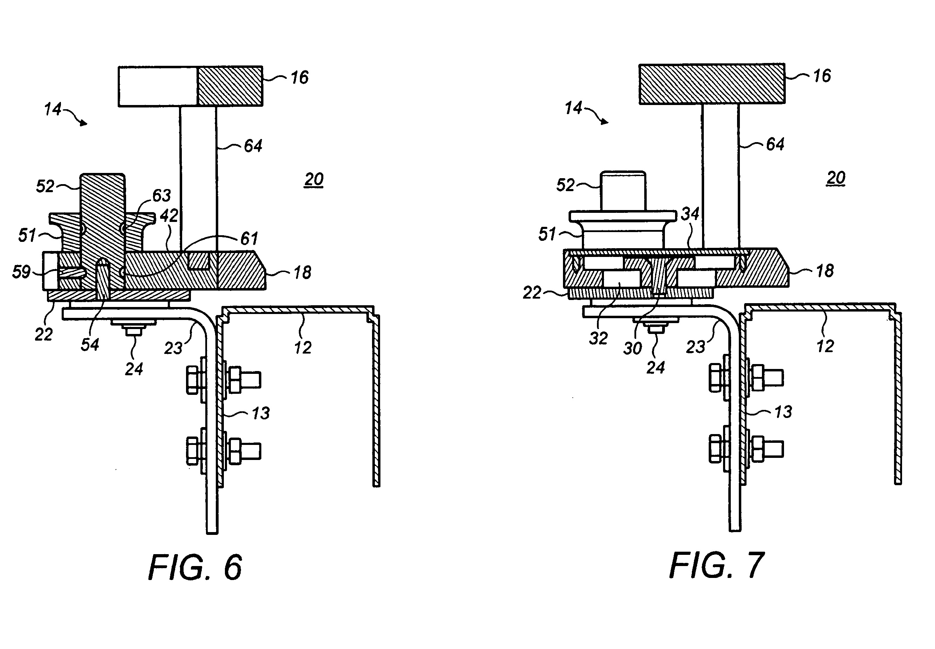

The guide rail unit 14 comprises an upper guide rail 16 and a lower guide rail 18. The guide rails 16, 18 are plate-like and define the channel 20 that extends along the length of the conveyor guide 10. The guide rail unit 14 faces a like guide rail unit 14 with their inner edges providing contact surfaces that support an article conveyed along the conveyor 10. The method of mounting the guide rail unit 14 to the base beam 12 will now be described with reference to Figures 6 and 7.

A flat core plate 22 is fastened to an angled bracket 23 that in turn is fastened to an upright side 13 of the base beam 12. The core plate 22 is fastened to the bracket 23 by a pair of screws 24.

The lower guide rail 18 couples to the core plate 22 such that the lower guide rail 18 can slide laterally to define a varying width of the channel 20. This lateral movement is constrained by three complementary slot and post arrangements, each comprising a post of circular cross-section received within a slot elongated in the lateral direction. These slot and post arrangements comprise a screw 30 that is secured to the core plate 22 to stand upright within a slot 32 provided in the lower guide rail 18. Each screw 30 has an enlarged head that is accommodated in a widened top half of each slot 32. This arrangement ensures that the lower guide rail 18 can slide across the core plate 22, but cannot lift up from the core plate 22. Covers 34 are provided for the slots 32, as best seen in Figure 1.

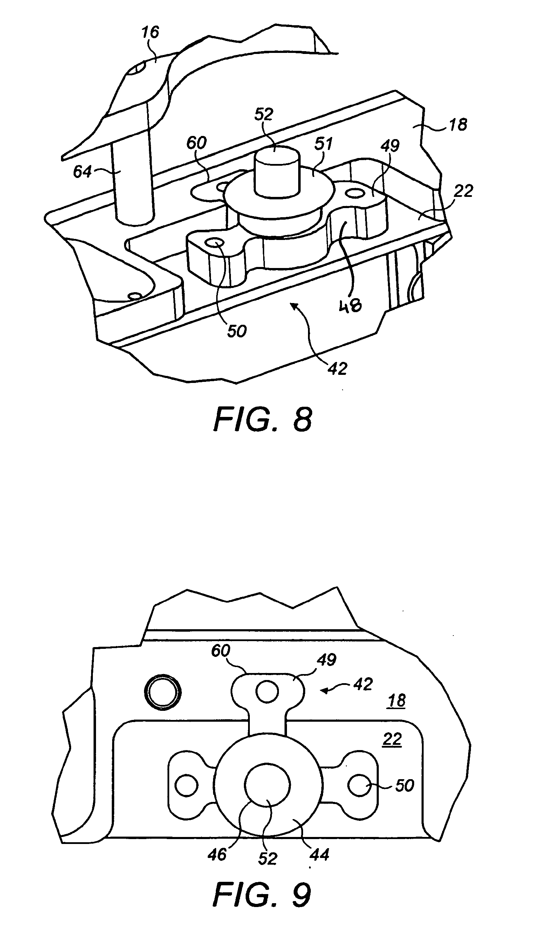

The position of the lower guide rail 18 is easily set in one of three indexed positions as follows. A pair of spiders 42 are provided for each lower guide rail 18. Each spider 42 generally comprises an annular body 44 with a central aperture 46, and three legs 48 of varying lengths extending radially from the body 44 at 90° intervals as best seen in Figures 8 and 9. Each leg 48 has an enlarged foot to form a t-shaped end 49. Each leg end 49 has a corresponding size and shape that matches a co-operating - recess 60 formed in the lower guide rail 18. Thus, the end 49 of each leg 48 may be received snugly within the recess 60. Each leg 48 is identifiable by a differently-coloured spot 50, a particular spot colour 50 being associated with a particular length of leg 48. All spiders 42 mounted on the unit 14 at any one time correspond and so each has the same colours of spots 50.

Each spider 42 is rotatably mounted on a shaft 52 that is held in position by a screw 54 that projects through the core plate 22. Movement of the spiders 42 is aided by a grip 51 provided on the top of each spider 42. The grip 51 is shaped such that it is easily gripped by a user changing the width of the channel 20. Each spider 42 is also provided with a spring detent grub screw 59 that has a rounded tip that projects into the central aperture 46 of the spider 42. Each shaft 52 is provided with three dimples 61 that receive the rounded tip of the grub screw 59. Thus, to move the spiders 42 some force is required to overcome the spring of the grub screw 59, but the spiders 42 can then be lifted clear of the lower guide rail 18, rotated to a new position and lowered back into position. Resistance will be felt when each spider 42 reaches the next position as the rounded tip the screw 59 is received in the next dimple 61, thus providing indexed positioning that corresponds to each leg 48 being aligned laterally.

The lower guide rail 18 is positioned by sliding it laterally with the spiders 42 held clear. To this end, a second set of dimples 63 is provided on the shaft 52 to allow the user to set the spiders 42 in a raised position. The slot and post arrangements constrain the lower guide rail 18 to move laterally in and out of the channel 20. The lower guide rail 18 is slid until the recess 60 align with the ends 49 of the legs 48. Then the spiders 42 are pushed down such that their ends 49 are received within the recess 60 and the grub screw 59 is received within a lower dimple 61, thereby fixing the lower guide rail 18 into position. Rotating the spiders 42 allows three different positions to be selected, the varying lengths of the legs 48 ensuring channels 20 of varying widths are formed.

The spring detent grub screw 59 also allows the spiders 42 to be lifted off their shafts 52 easily and replaced with another set of spiders 42 with different leg lengths. The different sets of spiders 42 may be identified by using different colours for the spots 50, or by providing a further colour-coded spot.

The lateral position of the upper guide rail 16 is adjusted in unison with the lateral position of the lower guide rail 18 because the upper guide rail 16 is attached to pillars 64 that are in turn attached to the lower guide rail 18 by screws (not shown).

Hence, the conveyor guide 10 comprises guide rails 16, 18 that are adjustable in the lateral directions. Vertical adjustment may be provided as well, for example using the slotted pillar arrangement described in our patent application PCT/GB2005/003316. Lateral adjustment of upper 16 and lower 18 guide rails is performed using the spiders 42 that provide three indexed positions for each guide rail pair 16, 18. Although different combinations of leg lengths could be used for guide rail units 14 facing each other across the channel 20, it is currently envisaged that the same leg length will be used for each guide rail unit 14 as this preserves a common centre line of the channel 20.

A skilled person will appreciate that the above embodiment may be varied in many different respects without departing from the scope of the present invention.

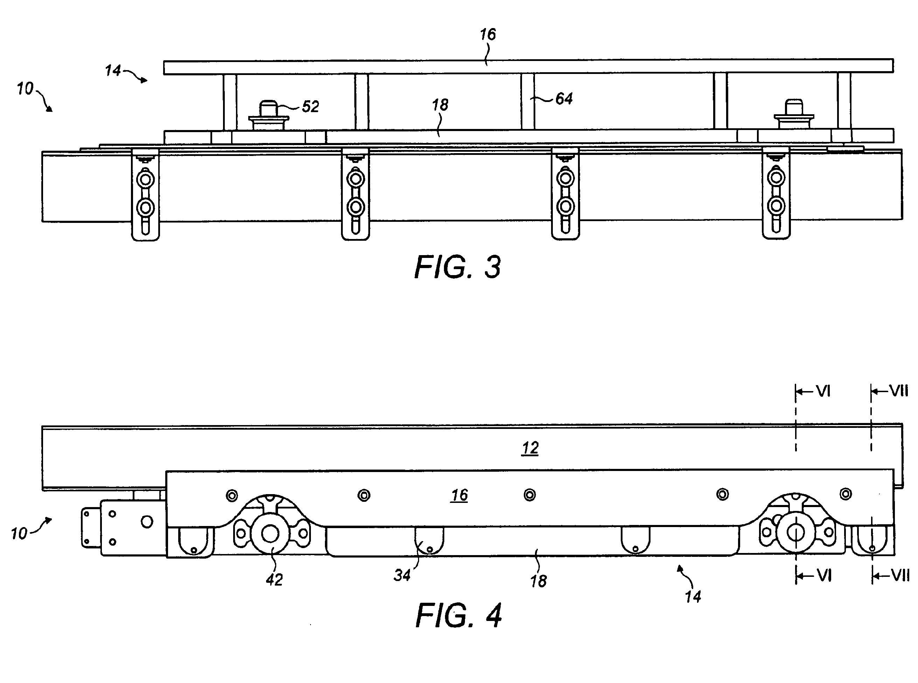

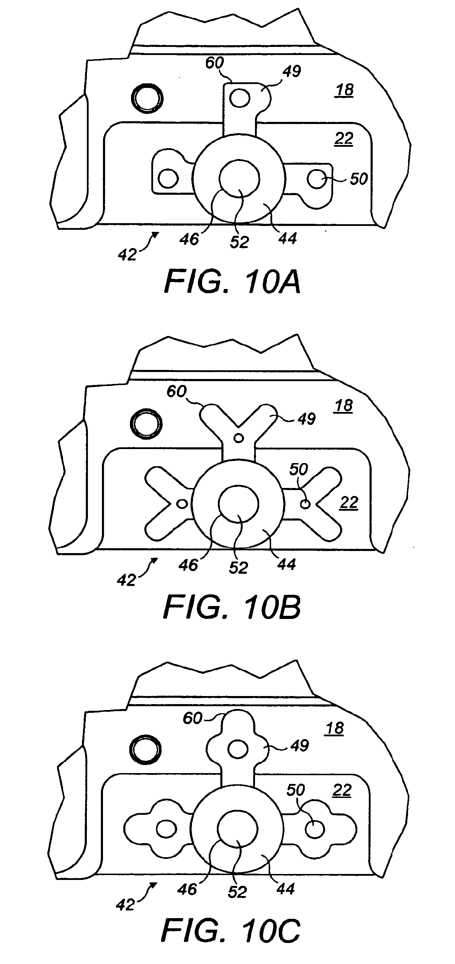

Figures 10a to 10c show different designs of spiders 42. The recesses 60 provided in the lower guide rails 16 are of a corresponding size and shape to receive the ends of the spider's legs 48. Figures 8 and 9 show the spider 42 illustrated in Figures 1 to 3 and described above. Each leg of the spider 42 comprises a T-shaped foot 49 at the end of each leg 48. Thus, the two ends of the foot 49 to either side of the main body of the leg 48 provide interference with the sides of the recess 60 to fix the lower guide rail 16 in place. However, only a single end of a foot 49 need be used to provide the required interference, for example as shown in the embodiment of Figure 10a. In this variation, each leg 48 of the spider 32 ends with an L-shaped foot 49.

Figure 10b shows a spider 42 with legs 48 that terminate in Y-shaped ends 49. As will be clear, the Y-shape provides the required interference fit. The enlarged portion providing the interference need not be provided at the end of each leg 48. An embodiment that follows this reasoning is shown in Figure 10c where each leg 48 terminates in a cross shape 49.

The channel 20 may be defined by one or more guide rail units 14. For example, a single guide rail unit 14 akin to one of those shown in the Figures may define one side of a channel 20 whereas the other side of the channel 20 may be defined by a feed screw that is rotated to move containers along the conveyor guide 10. Alternatively, each side of a channel 20 may comprise more than a single guide rail unit 14, as a series of two or more similar or different guide rail units 14 for example, such as that shown in Figure 11.

Figure 11 shows a conveyor guide 10 comprising a series of guide rail units 14 arranged along either side of a channel 20. Each guide rail unit 14 is broadly similar to those described above. Thus, the following description concentrates on the differences in the guide rail units 14 rather than unnecessarily repeating description of like parts.

The guide rail units 14 may be linked. The link may be rigid such that adjacent guide rail units 14 move in unison, or may be flexible such that adjacent guide rail units 14 may be moved one at a time.

Other variations to the embodiments described above are possible without departing from the scope of the invention defined by the claims. For example, not all guide rail units 14 need be adjustable. For example, only one side of a channel 20 need be provided with a width-adjustable guide rail unit 14 to allow variation of the width of the channel 20.

However, it is preferred to provide width-adjustable guide rail units 14 on both sides of the channel 20 because this allows the width of the channel 20 to be adjusted while preserving the position of its centre line. A guide rail unit 14 within a conveyor guide 10 may be width-adjustable and a conveyor guide 10 may comprise any combination of such guide rail units 14 and also further include non-adjustable guide rail units 14.

The conveyor guide 10 may define a straight channel 20, a curved channel 20 or a kinked channel 20. An example of a curved channel 20 is shown in Figure 11 where the leftmost guide rail units 14 define a curved path. This Figure also shows that straight and curved guide rail units 14 and 14' can be freely mixed to define a required path. As can be seen from Figure 11, curved guide rail units 14 correspond to the other straight guide rail units 14, save for the shape of the channel 20 they define. The dimensions of the conveyor guide 10 may be freely varied to suit needs. A currently preferred application is for use in an automated bottling line, where bottles with capacities from, for example, 250ml to 21 may be conveyed.

How the articles are to be conveyed is also a matter of choice. The articles may be conveyed through the conveyor guide 10 by a belt that supports the articles from below, by a carrier that grips the articles from above (e.g. that grips the necks of bottles), or by rotating rollers disposed periodically along a conveyor line or a feed screw that imparts motion to articles that contact them as they pass by.

The embodiment of Figures 1 to 3 comprises four guide rails 16, 18 to define the channel 20, with each opposed pair being at a common height. Other numbers of guide rails may be used to define the channel 20, e.g. 3, 5, 6, etc., and pairs of opposed guide rails 16, 18 need not be positioned at different heights. Of course, each guide rail unit 14 need not carry the same number of guide rails 16, 18. The height of each guide rail 16, 18 may be freely chosen.

The guide rails 16, 18 shown in the accompanying Figures are thin with little depth. However, the depth of the guide rails 16, 18 may be freely chosen. For example, each guide rail unit 14 may carry a single deep guide rail 16, 18 for supporting a straight-sided bottle or the like. The widths of the guide rails 16, 18 may also be varied. This would allow the width of the channel 20 to vary with height, e.g. it may be narrower at the top to correspond to the narrowest neck of a bottle.

Whilst three-legged spiders 42 are shown in the Figures, the number of legs may be freely chosen and arranged as desired, as described above. Also, the number of spiders 42 per guide rail unit 14 may be varied.

The inclusion of core plates 22 is also optional. For example, the shafts 52 about which the spiders 42 rotate may be attached directly to the base plate 12 where the lower guide rails 18 are to be positioned above the base plate 12.

## Claims

1. An adjustable conveyor guide rail unit (14) adapted for use in a conveyor guide (10) to define the side of a channel (20) through which an article may be conveyed, the guide rail unit (14) comprising a guide member (16, 18) operable to be set in a plurality of discrete positions relative to the channel as a whole, thereby allowing the width of the channel to be varied, and wherein the guide member is coupled to a mount (23) that includes a rotatable spider (42) mounted on a shaft (52), the spider (42) having a plurality of legs (48) of different lengths relative to the shaft,
and being rotatable about the shaft (52) to present an end of a leg (48) to a correspondingly-shaped recess (60) provided in the adjustable guide member thereby to set the guide member in the plurality of positions, **characterized in that** the legs each terminating at an end (49) of corresponding shape that includes a widened portion.

2. The guide rail unit of Claim 1, wherein the recess (60) has a narrowed neck for receiving the leg (48) of the spider and an enlarged head for receiving the end (49) of the leg, wherein the neck is narrower than the widened portion of the end thereby stopping movement of the guide member (16,18) and setting the width of the channel.

3. The guide rail unit of claim 1 or claim 2, wherein the end (49) of each leg (48) comprises a foot that is L-shaped, T-shaped, Y-shaped or jigsaw shaped.

4. The guide rail unit of any preceding claim, wherein the spider (42) is movable along the shaft thereby allowing the foot to be moved clear of the recess (60).

5. The guide rail unit of any preceding claim, wherein the spider (42) comprises at least three mutually orthogonal legs (48) of different lengths.

6. The guide rail unit of any preceding claim, further comprising a second spider (42) like the first spider (42) and wherein the guide member has a second recess (60) for receiving a foot of a leg of the second spider.

7. The guide rail unit of any preceding claim, further comprising a second guide member (16) disposed above the first guide member (14) and wherein, optionally, the second guide member (16) is mounted on at least one support (64) attached to the first guide member.

8. A conveyor guide (10) including the conveyor guide rail unit (14) of any preceding claim.

9. A conveyor guide (10) comprising a channel (20) through which articles may be conveyed, a first side of the channel being defined at least in part by a guide rail unit (14) according to any of Claims 1 to 7, and a second side of the channel being defined at least in part by a further guide rail unit (14) according to any of Claims 1 to 7.

10. The conveyor guide of Claim 8 or Claim 9, comprising a channel (20) through which articles may be conveyed, wherein a first side of the channel is defined at least in part by a plurality of guide rail units (14) according to any of Claims 1 to 7 and, optionally, wherein an adjacent pair of the plurality of guide rail units (14) are coupled together.

11. The conveyor guide of Claim 10, wherein the guide members of the adjacent pair of guide rail units (14) are coupled together such that movement of one guide member causes a corresponding movement of the other guide member.

12. The conveyor guide of Claim 10 or Claim 11 when either is dependent upon Claim 7, wherein the second guide members (16) of the adjacent pair of guide rail units (14) are coupled together such that movement of one second guide member (16) causes a corresponding movement of the other second guide member (16).

13. The conveyor guide of any of Claims 10 to 12, wherein the adjacent guide rail units (14) are coupled by interlocking formations, for example jigsaw-shaped interlocking formations.

14. The conveyor guide of Claim 13, wherein each of the plurality of guide rail units (14) has only one spider (42) and only one co-operating recess (60).

15. A method of adjusting a conveyor guide (10) comprising a guide rail unit (14) including a guide member (16,18) arranged to define one side of a channel (20) through which an article may be conveyed, and a rotatable spider (42) mounted on a shaft (52), the spider (42) having a plurality of legs (48) of different lengths relative to the shaft, and the guide member (18) having a slot (32) sized and positioned to receive a foot (49) of a leg (48) of the spider; the method comprising changing the position of the guide member (16,18) from a first position to a second position of a plurality of discrete positions relative to the guide rail unit (14) as a whole, thereby adjusting the width of the channel (20), by: (i) moving the guide member (16,18) relative to the spider (42) to disengage the spider's foot (49) from the slot (32); (ii) rotating the spider (42) to present a different foot (49) to the slot (32): and (iii) moving the guide member (16,18) relative to the spider (42) such that the different foot (49) is received back in position within the slot (32), **characterized in that** the legs (48) each terminating in an end (49) or foot of corresponding shape that includes a widened portion,.

## Patentansprüche

1. Einstellbare Förderführungs-Schieneneinheit (14) zur Verwendung in einer Förderführung (10) zur Definition der Seite eines Kanals (20), durch welchen ein Gegenstand gefördert werden kann, wobei die Führungsschieneneinheit (14) ein Führungselement (16, 18) umfasst, welches in eine Mehrzahl von diskreten Positionen relativ zu dem Kanal als Ganzes einstellbar ist, wodurch die Breite des Kanals variiert werden kann, und wobei das Führungselement mit einer Befestigung (23) verbunden ist, welche einen auf einem Schaft (52) montierte, drehbaren Armstern (42) umfasst, wobei der Armstern (42) eine Mehrzahl von Beinen (48) mit bezogen auf den Schaft unterschiedlichen Längen umfasst und um den Schaft (52) drehbar ist, um ein Ende eines Beins (48) einer entsprechend geformten Ausnehmung (60) zuzuführen, welche in dem einstellbaren Führungselement vorgesehen ist, und um so das Führungselement in die Vielzahl von Positionen einzustellen, **dadurch gekennzeichnet, dass**
die Beine jeweils in einem Ende (49) mit entsprechender Form enden, welches einen aufgeweiteten Bereich umfasst.

2. Führungsschieneneinheit nach Anspruch 1, wobei die Ausnehmung (60) einen verengten Hals zur Aufnahme des Beins (48) des Armsterns und einen aufgeweiteten Kopf zur Aufnahme des Endes (49) des Beins umfasst, wobei der Hals enger als der aufgeweitete Bereich des Endes ist, sodass eine Bewegung des Führungselements (16, 18) gestoppt wird und die Breite des Kanals festgelegt wird.

3. Führungsschieneneinheit nach Anspruch 1 oder 2, wobei das Ende (49) jedes Beins (48) einen L-förmigen, T-förmingen, Y-förmigen oder sägezahnförmigen Fuß umfasst.

4. Führungsschieneneinheit nach einem der vorhergehenden Ansprüche, wobei der Armstern (42) entlang des Schafts beweglich ist, sodass eine Befreiung des Fußes aus der Ausnehmung (60) ermöglicht wird.

5. Führungsschieneneinheit nach einem der vorhergehenden Ansprüche, wobei der Armstern (42) zumindest drei untereinander orthogonale Beine (48) mit unterschiedlichen Längen umfasst.

6. Führungsschieneneinheit nach einem der vorhergehenden Ansprüche, ferner umfassend einen zweiten Armstern (42) wie der erste Armstern (42), wobei das Führungselement eine zweite Ausnehmung (60) zur Aufnahme eines Fußes eines Beins des zweiten Armsterns umfasst.

7. Führungsschieneneinheit nach einem der vorhergehenden Ansprüche, ferner umfassend ein zweites Führungselement (16), welches oberhalb des ersten Führungselements (14) angeordnet ist, wobei das zweite Führungselement (16) optional auf zumindest einem Träger (64) montiert ist, welcher an dem ersten Führungselement befestigt ist.

8. Förderführung (10) mit einer Förderführungs-Schieneneinheit (14) nach einem der vorhergehenden Ansprüche.

9. Förderführung (10) mit einem Kanal (20), durch welchen Gegenstände gefördert werden können, wobei eine erste Seite des Kanals zumindest teilweise durch eine Führungsschieneneinheit (14) nach einem der Ansprüche 1 bis 7 definiert ist, und eine zweite Seite des Kanals zumindest teilweise durch eine weitere Führungsschieneneinheit (14) nach einem der Ansprüche 1 bis 7 definiert ist.

10. Förderführung nach Anspruch 8 oder 9, umfassend einen Kanal (20), durch welchen Gegenstände gefördert werden können, wobei eine erste Seite des Kanals zumindest teilweise von einer Mehrzahl von Förderschieneneinheiten (14) nach einem der Ansprüche 1 bis 7 definiert ist, und optional ein benachbartes Paar der Mehrzahl von Förderschieneneinheiten (14) miteinander gekoppelt ist.

11. Förderführung nach Anspruch 10, wobei die Führungselemente des benachbarten Paars von Förderführungseinheiten (14) miteinander gekoppelt sind, sodass eine Bewegung eines der Führungselemente eine entsprechende Bewegung des anderen Führungselements verursacht.

12. Förderführung nach Anspruch 10 oder 11, wobei jeder von Anspruch 7 abhängt, wobei die zweiten Führungselemente (16) des benachbarten Paars von Führungsschieneneinheiten (14) miteinander gekoppelt sind, sodass eine Bewegung des einen zweiten Führungselements (16) eine entsprechende Bewegung des anderen zweiten Führungselements (16) verursacht.

13. Förderführung nach einem der Ansprüche 10 bis 12, wobei die benachbarten Führungsschieneneinheiten (14) durch Verriegelungsformationen gekoppelt sind, beispielsweise sägezahnförmige Verriegelungsformationen.

14. Förderführung nach Anspruch 13, wobei jede der Mehrzahl von Führungsschieneneinheiten (14) nur einen Armstern (42) und nur eine damit zusammenwirkende Ausnehmung (60) hat.

15. Verfahren zum Einstellen einer Förderführung (10) umfassend eine Führungsschieneneinheit (14) mit einem Führungselement (16, 18), welches so angeordnet ist, dass es die Seite eines Kanals (20) definiert, durch welchen ein Gegenstand gefördert werden kann, sowie ein drehbarer, auf einem Schaft (52) montierter Armstern (42), wobei der Armstern (42) eine Mehrzahl von Beinen (48) mit bezogen auf den Schaft unterschiedlichen Längen hat, und das Führungselement (18) einen Spalt (32) hat, der so bemessen und angeordnet ist, dass er einen Fuß (49) des Beins (48) des Armsterns aufnehmen kann;
wobei das Verfahren eine Veränderung der Position des Führungselements (16, 18) aus einer ersten Position in eine zweite Position aus einer Mehrzahl von diskreten Positionen bezogen auf die Führungsschieneneinheit (14) insgesamt umfasst, um so die Breite des Kanals (20) einzustellen mittels:
(i) Bewegen des Führungselements (16, 18) relativ zu dem Armstern (42) zum Lösen der Verbindung des Armsternfußes (49) mit dem Spalt (32);
(ii) Drehen des Armsterns (42) zum Zuführen eines anderen Fußes (49) zu dem Spalt (32); und
(iii) Bewegen des Führungselements (16, 18) relativ zu dem Armstern (42), sodass der andere Fuß (49) wieder in die Position innerhalb des Spalts (32) aufgenommen wird,
**dadurch gekennzeichnet, dass** die Beine (48) jeweils in einem Ende (49) oder Fuß mit einer entsprechenden Form enden, welches einen aufgeweiteten Bereich umfasst.

## Revendications

1. Unité de rail de guidage de convoyeur ajustable (14) apte à être utilisée dans un guidage de convoyeur (10) pour définir le côté d'un canal (20) à travers lequel un article peut être convoyé, l'unité de rail de guidage (14) comprenant un élément de guidage (16, 18) apte à être placé dans une pluralité de positions discrètes relativement au canal dans son ensemble, en permettant ainsi une variation de la largeur du canal, et où l'élément de guidage est couplé à une monture (23) qui comprend un croisillon tournant (42) monté sur un arbre (52), le croisillon (42) ayant une pluralité de branches (48) de longueurs différentes relativement à l'arbre et pouvant tourner autour d'un arbre (52) pour présenter une extrémité d'une branche (48) à un évidement (60) de forme correspondante réalisé dans l'élément de guidage ajustable en plaçant ainsi l'élément de guidage dans la pluralité de positions, **caractérisée en ce que** les branches se terminent chacune à une extrémité (49) d'une forme correspondante qui inclut une portion élargie.

2. Unité de rail de guidage selon la revendication 1, dans laquelle l'évidement (60) a un col retréci pour recevoir la branche (48) du croisillon, et une tête agrandie pour recevoir l'extrémité (49) de la branche, où le col est plus étroit que la portion élargie de l'extrémité en arrêtant ainsi le déplacement de l'élément de guidage (16, 18) et en réglant la largeur du canal.

3. Unité de rail de guidage selon la revendication 1 ou la revendication 2, dans laquelle l'extrémité (49) de chaque branche (48) comprend un pied en forme de L, en forme de T, en forme de Y ou en forme de casse-tête.

4. Unité de rail de guidage selon l'une quelconque des revendications précédentes, dans laquelle le croisillon (42) est déplaçable le long de l'arbre en permettant ainsi que le pied soit dégagé de l'évidement (60).

5. Unité de rail de guidage selon l'une quelconque des revendications précédentes, dans laquelle le croisillon (42) comprend au moins trois branches mutuellement orthogonales (48) de longueurs différentes.

6. Unité de rail de guidage selon l'une quelconque des revendications précédentes, comprenant en outre un deuxième croisillon (42) comme le premier croisillon (42), et où l'élément de guidage présente un deuxième évidement (60) pour recevoir un pied ou d'une branche du deuxième croisillon.

7. Unité de rail de guidage selon l'une quelconque des revendications précédentes, comprenant en outre un deuxième élément de guidage (16) disposé au-dessus du premier élément de guidage (14) et où, en option, le deuxième élément de guidage (16) est monté sur au moins un support (64) fixé au premier élément de guidage.

8. Guidage de convoyeur (10) incluant l'unité de rail de guidage de convoyeur (14) selon l'une quelconque des revendications précédentes.

9. Guidage de convoyeur (10) comprenant un canal (20) à travers lequel des articles peuvent être convoyés, un premier côté du canal étant défini au moins en partie par une unité de rail de guidage (14) selon l'une quelconque des revendications 1 à 7, et un deuxième côté du canal étant défini au moins en partie par une autre unité de rail de guidage (14) selon l'une quelconque des revendications 1 à 7.

10. Guidage de convoyeur selon la revendication 8 ou la revendication 9, comprenant un canal (20) à travers lequel les articles peuvent être convoyés, où un premier côté du canal est défini au moins en partie par une pluralité d'unités de rail de guidage (14) selon l'une quelconque des revendications 1 à 7 et, en option, où une paire adjacente de la pluralité d'unités de rail de guidage (14) sont couplées ensemble.

11. Guidage de convoyeur selon la revendication 10, dans lequel les éléments de guidage de la paire adjacente des unités de rail de guidage (14) sont couplés ensemble de telle sorte que le déplacement d'un élément de guidage provoque un déplacement correspondant de l'autre élément de guidage.

12. Guidage de convoyeur selon la revendication 10 ou la revendication 11 lorsque l'une quelconque de celles-ci dépend de la revendication 7, dans lequel les deuxièmes éléments de guidage (16) de la paire adjacente des unités de rail de guidage (14) sont couplés ensemble de façon qu'un déplacement du deuxième élément de guidage (16) provoque un déplacement correspondant de l'autre deuxième élément de guidage (16).

13. Guidage de convoyeur selon l'une quelconque des revendications 10 à 12, dans lequel les unités de rail de guidage adjacentes (14) sont couplées par des formations d'interverrouillage, par exemple des formations d'interverrouillage en forme de casse-tête.

14. Guidage de convoyeur selon la revendication 13, dans lequel chacune de la pluralité d'unités de rail de guidage (14) comporte seulement un croisillon (42) et seulement un évidement coopérant (60).

15. Procédé d'ajustement d'un guide de convoyeur (10) comprenant une unité de rail de guidage (14) incluant un élément de guidage (16, 18) agencé pour définir un côté d'un canal (20) à travers lequel un article peut être convoyé, et un croisillon tournant (42) monté sur un arbre (52), le croisillon (42) ayant une pluralité de branches (48) de longueurs différentes relativement à l'arbre, et l'élément de guidage (18) ayant une fente (32) dimensionnée et positionnée pour recevoir un pied (49) d'une branche (48) du croisillon; le procédé comprenant le changement de la position de l'élément de guidage (16, 18) d'une première position à une deuxième position d'une pluralité de positions discrètes relativement à l'unité de rail de guidage (14) dans son ensemble, en ajustant ainsi la largeur du canal (20), en (i) déplaçant l'élément de guidage (16, 18) relativement au croisillon (42) pour désengager le pied du croisillon (49) de la fente (32); (ii) en faisant tourner le croisillon (42) pour présenter un pied différent (49) à la fente (32); et (iii) en déplaçant l'élément de guidage (16, 18) relativement au croisillon (42) de telle sorte que le pied différent (49) est reçu à nouveau en position dans la fente (32), **caractérisé en ce que** les branches (48) se terminent chacune dans une extrémité (49) ou pied d'une forme correspondante qui comprend une portion élargie.
